**Europäisches Patentamt**

**European Patent Office**

**Office européen des brevets**

(19)

(11) Veröffentlichungsnummer: **0 041 153**
**B1**

# (12) EUROPÄISCHE PATENTSCHRIFT

(45) Veröffentlichungstag der Patentschrift:
**11.07.84**

(21) Anmeldenummer: **81103586.4**

(22) Anmeldetag: **11.05.81**

(51) Int. Cl.³: **G 03 C 1/74**

(54) **Vorrichtung zum Begiessen von bewegten Bändern und Verfahren zur Erstellung der Vorrichtung.**

(30) Priorität: **21.05.80 DE 3019460**

(43) Veröffentlichungstag der Anmeldung:
**09.12.81 Patentblatt 81/49**

(45) Bekanntmachung des Hinweises auf die Patenterteilung:
**11.07.84 Patentblatt 84/28**

(84) Benannte Vertragsstaaten:
**BE CH DE FR GB IT LI**

(56) Entgegenhaltungen:
**CH - A - 495 817**

(73) Patentinhaber: **AGFA-GEVAERT Aktiengesellschaft,
D-5090 Leverkusen 1 (DE)**

(72) Erfinder: **Glotzbach, Helmut, Ing. Grad.,
Raushofstrasse 14, D-5090 Leverkusen 3 (DE)**

## Beschreibung

Die Erfindung bezieht sich auf eine Vorrichtung zum Begiessen von bewegten Bändern mit mehreren Schichten, insbesondere zum Begiessen von photographischen Filmen und Papieren mit photographischen Emulsionen und Schichten, wobei die Vorrichtung aus einem Giesserblock mit mehreren miteinander verschraubten profilierten Teilstücken besteht.

Die Erfindung beinhaltet auch ein Verfahren zur Zusammenfügung der profilierten Teilstücke eines Giesserblocks zum Begiessen von bewegten Bändern, insbesondere von photographischen Filmen und Papieren mit mehreren photographischen Emulsionen und Schichten.

In der photographischen Industrie werden seit längerer Zeit Papier- und Filmbahnen mit mehreren Schichten gleichzeitig begossen.

Zu den in der photographischen Industrie üblichen Mehrschichten-Begiessverfahren gehört das Kaskadenbegiessverfahren, bei dem auf einer geneigten Gleitfläche eine oder mehrere flüssige Beschichtungsmaterialien gleichzeitig abwärts fliessen über einen geringen Abstand (0,15-0,3 mm) zwischen Giesserkante und vorbeibewegter Bahn auf diese Bahn aufgetragen werden. Eine derartige Giesseinrichtung ist in der DE-A Nr. 1151173 beschrieben.

Daneben gewinnt das sogenannte Vorhanggiessverfahren seit einiger Zeit für die photographische Industrie an Bedeutung. Für das Vorhanggiessverfahren sind zwei Verfahrensvarianten bekannt, und zwar die sogenannten Schlitzgiesser und der sogenannte Schnabelgiesser oder Gleitflächengiesser nach dem Prinzip des Kaskadengiessers arbeitend. Bei den Schlitzgiessern tritt das Beschichtungsmaterial am unteren Ende eines quer über der zu beschichtenden Bahn angeordneten Ausflussspaltes aus und bildet dort unmittelbar einen freifallenden Vorhang, der auf eine darunter bewegte Bahn auftrifft und sich auf diese Bahn auflegt. Bei den Schnabelgiessern oder Gleitflächengiessern hingegen wird das Beschichtungsmaterial durch einen Austrittsschlitz auf eine geneigte Gleitfläche gedrückt, fliesst dann der Schwerkraft folgend über die Gleitfläche, die am unteren Ende bogen- oder schnabelförmig ausgebildet ist, hinab und bildet erst am unteren Ende des Schnabels beim Verlassen desselben einen freifallenden Vorhang. In beiden Fällen kann der Flüssigkeitsvorhang aus einer oder mehreren Schichten bestehen. Ein Vorhanggiessverfahren und eine Vorrichtung ist aus der DE-B Nr. 1928031 bekannt. Ein neuerer vorteilhafter Vorhanggiesser ist aus der DE-A Nr. 2913217 bekannt.

Sowohl an die Giessblöcke der Kaskadengiesser als auch an die Giessblöcke der Vorhanggiesser werden sehr hohe Genauigkeitsansprüche gestellt. Zur Erzielung eines einwandfreien Begussbildes ist es besonders wichtig, dass die geneigte Ablauffläche einwandfrei eben und die Überlaufkanten der Extrusionsspalte einwandfrei horizontal sind. Schon Abweichungen von wenigen Micrometern können zu Streifen im Begussbild führen.

Zur Herstellung des aus profilierten Teilstücken bestehenden Blocks werden die Teilstücke zunächst auf spannabhebenden Werkzeugmaschinen bearbeitet und dann miteinander verschraubt. Alsdann erfolgt die Feinstbearbeitung des zusammengeschraubten Blockes, seine Verschraubung mit etwaigen Tragkonsolen und eine letzte Bearbeitung der geneigten Ablauffläche und der Überlaufkanten vor Ort. Der mit Temperierbohrungen versehene Block wird nach dem Zusammenschrauben an ein Temperiersystem angeschlossen und auf die Betriebstemperatur gebracht. Die Temperierung wird während der weiteren Fertigung und Montage ununterbrochen aufrechterhalten.

Ein aus Teilstücken zusammenschraubbarer Giesserblock ist in der US-A Nr. 3289632 beschrieben.

Bei dieser Konstruktion und dem Herstellungsverfahren des Giesserblockes stellt sich als Nachteil heraus, dass sich die einzelnen profilierten Teilstücke gegeneinander versetzen; vorher sorgfältig parallel gearbeitete Kanten sind plötzlich um einige Micrometer verschoben. Hierfür kommen folgende Ursachen in Frage:

1. Der Giesserblock muss während der Bearbeitung wiederholt angehoben und transportiert werden. Dabei wird er unkontrolliert auf Torsion beansprucht; d.h. in den Fugen zwischen den profilierten Teilstücken sind oft erhebliche Schubkräfte zu übertragen, die zu den genannten Versetzungen führen.

2. Bei dem Verschrauben des Giesserblocks mit den Konsolen wird durch jede Schraube eine Kraft auf das einzelne profilierte Teilstück ausgeübt, die z.T. als Schubkraft über die Fugen in die benachbarten profilierten Teilstücke weitergeleitet wird und dabei Versetzungen auslösen kann.

3. Besondere Beachtung ist weiterhin der Lagerung des Blocks auf den Konsolen zu schenken. Die Auflageflächen des Blocks werden maschinell sauber parallel Gearbeitet. Die begenflächen an den Konsolen müssen ebenso sauber parallel bearbeitet sein, da sonst durch das Gewicht des Blocks ein Torsionsmoment ausgelöst wird. Diese Forderung ist bei den engen Toleranzen, die einzuhalten sind, nicht einfach zu erfüllen. Kleine Fehler in der Parallelität der Auflageflächen führen schon zu nicht tolerierbaren Versetzungen infolge der Torsion.

Entsprechende Präzisionsanforderungen sind an die Aufnahmevorrichtungen während der Werkstattarbeit zu stellen.

Die unerwünschten Versetzungen treten aber nicht nur bei der Fertigung und Montage auf. Oft wird auf einer Begiessmaschine mit unterschiedlichen Gussbreiten fabriziert. Bei Gussbreitenwechsel muss dann der Giesserblock ausgetauscht werden. Dieser Austauschvorgang in Verbindung mit dem dabei notwendigen Transport birgt dieselben Gefahren für die Verformung des Giesserblocks wie die Erstmontage. Erschwerend ist jetzt aber der Umstand, dass auftretende Versetzungen meist eine längere Betriebsunterbrechung zur Folge haben.

Zur Erzielung einer höheren Stabilität des Giesserblockes werden Giesserkonsolen verwendet, auf die die Teilstücke aufmontiert werden. Es werden z.B. nach der DE-A Nr. 2721184 die Teilstücke des Giesserblockes nach dem Zusammenfügen mit Zugschrauben noch auf einem torsionssteifen Hohlträger fest zu einer Einheit verschraubt. Hierzu müssen die Berührungsflächen des Giesserblockes mit dem Hohlträger in sehr engen Toleranzen plan sein, da beim Verschrauben des Giesserblockes durch jede Schraube auf das Teilstück eine Kraft ausgeübt wird. Bei kleinster Unebenheit der Berührungsflächen überträgt sich diese Kraft als Schubkraft über die Berührungsfugen auf die benachbarten Teilstücke und kann so zu Versetzungen der Teilstücke gegeneinander führen, obwohl die Feinstbearbeitung des kompletten Blockes erst nach der Montage des Giesserblockes auf den torsionssteifen Hohlträger erfolgt.

Ein weiterer Nachteil bekannter Konstruktionen mit einer Giesserblockkonsole ist die statische Unbestimmtheit der Kräfte im Giesserblock, da die Kräftewirkungslinien der durch den Block geführten Zugschrauben senkrecht zu denen verlaufen, die von den Montageschrauben zur Montage des Giesserblockes auf die Konsole erzeugt werden.

Es ist aus der Praxis auch bekannt, zur Vermeidung von Versetzungen der Teilstücke des Giesserblockes diese teilweise miteinander oder mit der Konsole zu verschweissen. Dies führt ebenfalls dazu, dass sich die im montierten Block herrschenden Spannungen rechnerisch nicht bestimmen lassen.

Ein Verschweissen bringt ausserdem den erheblichen Nachteil mit sich, dass eine spätere Nacharbeit eines oder mehrerer Teilstücke, die nur an einem Einzelteil durchgeführt werden kann, zumindest erheblich erschwert, wenn nicht unmöglich wird. Eine stabile Befestigung der Teilstücke des Giesserblockes untereinander und auf der Konsole erfordert überdimensionierte Befestigungsschrauben und diese wiederum entsprechend dimensionierte Teilstücke. In Verbindung mit den notwendigen Temperierbohrungen in den Teilstücken werden Teilstücke erforderlich, die Ausmasse besitzen, die giesstechnisch nicht erwünscht sind. Sie führen zu nachteilig langen Ablaufflächen für die Giesslösungen. Da Giesslösungen aber während des Fliessens über die Ablaufflächen sehr empfindlich auf Störungen von aussen reagieren, sind möglichst kurze Ablaufflächen erwünscht.

Die Entwicklung neuer Giessverfahren und neuer photographischer Materialien führt zu einer immer grösseren Anzahl von neun oder mehr Schichten, die in einem Arbeitsgang auf die Film- oder Papierbahnen aufgebracht werden. Durch die hierdurch notwendigen vielen Teilstücke der Giesser werden die Abmessungen und Gewichte unproportional grösser und somit auch die vorgenannten Schwierigkeiten.

Ausser den Schwierigkeiten bei der Herstellung derartiger Giesserblöcke entstehen auch technische Probleme durch das grosse Gewicht bei dem Arbeiten mit diesen Giesserblöcken in der Produktion. Um Produktionsverluste gering zu halten, werden Kaskadengiesser bei auftretenden Klebe- oder Fehlerstellen der Bahn kurzzeitig von der Bahn weg und wieder zugeführt. (Ab- und Antauchen.) Bei grossen Bahngeschwindigkeiten entstehen daher mit einem Giesserblock mit hohem Gewicht lange Ab- und Antauchzeiten und entsprechend hohe Materialverluste.

Für die Verschraubung vieler Teilstücke zu einem Giesserblock bringt die Verwendung von entsprechend stark dimensionierten Zugschrauben erhebliche Unsicherheiten mit sich.

1. Die rechnerische Vorausberechnung der in den Schrauben auftretenden Zugkräfte ist kaum möglich. Das Anzugsmoment Mges, welches von einem Schraubenschlüssel auf eine Mutter übertragen wird, ist

$$M_{ges} = N_R + M_G + M_E,$$

hierbei ist

$M_R$ = das Moment zur Überwindung der Reibung an der Mutterauflagefläche,

$M_G$ = das Moment zur Überwindung der Reibung im Gewinde, und

$M_E$ = das effektive Moment zur Erzeugung der Zugkraft in der Schraube.

Von den drei Teilmomenten ist nur $M_E$ rechnerisch einwandfrei zu bestimmen. Die übrigen Teilmomente $M_R$ und $M_G$ sind von Reibwerten abhängig, die in einem weiten Bereich schwanken. Da aber $M_R$ und $M_G$ einen hohen Anteil des Gesamtmomentes Mges beinhalten, ist die Berechnung sehr unsicher, wenn nicht unbrauchbar.

2. Die Teilmomente $M_G$ und $M_E$ wirken auf den Schraubenschaft, so dass der Schraubenschaft einer doppelten Beanspruchung, nämlich der auf Zug und der auf Torsion, ausgesetzt wird. Bei gegebenem Schraubenschaftquerschnitt wird so eine erhebliche Verminderung der maximal möglichen Zugkraft erhalten.

3. Das Drehmoment der Zugschrauben ist auch auf die Spannungsverhältnisse im Giesserblock von Nachteil, da auf den Giesserblock Spannungen einwirken, die sich aus Druck und Verdrehung zusammensetzen. Da der Anteil der Verdrehspannung sehr hoch ist, werden insbesondere Giesserblöcke mit geringer Bauhöhe und somit kleinem Widerstandsmoment messbar verdrillt und für die Herstellung qualitativ guter Photomaterialien unbrauchbar.

4. Das Versteifen der Giesserblöcke mit Konsolen bewirkt eine erhebliche Gewichtsvergrösserung und macht eine Berechnung der Spannungsverhältnisse im Giesserblock und somit des zum Anziehen der Muttern erforderlichen Gesamtanzugsmomentes Mges unmöglich. Die Verwendung von Konsolen ist bei einem Vorhanggiesser, wie er in der DE-A Nr. 2913217 beschrieben ist, unmöglich, da die Giesslösungen bei diesem V-förmigen Giesserblock beidseitig durch Extrusionsspalte austreten.

Der Erfindung liegt die Aufgabe zugrunde, eine Vorrichtung und ein Verfahren zu der Herstellung einer Vorrichtung der eingangs genannten Art zu schaffen, mit der es auf einfache Weise möglich ist, den Giesserblock klein und leicht und somit die Ablauffläche kurz zu halten, die Teilstücke des Giesserblockes sicher und fest miteinander zu verbinden, die Kräfte im Giesserblock rechnerisch bestimmbar zu machen und eine einfache Montage und Demontage des Giesserblockes zu ermöglichen.

Ausgehend von einer Vorrichtung der einleitend genannten Art ist die Aufgabe erfindungsgemäss dadurch gelöst, dass zur Zusammenfügung der Teilstücke des Giesserblockes Schrumpfanker vorgesehen sind.

Überraschenderweise zeigt sich, dass durch die Verwendung von Schrumpfankern für den Zusammenbau der Teilstücke eines Giesserblockes eine Möglichkeit gefunden wurde, einen Giesserblock geradezu ideal zu gestalten, und in einfacher Weise zu montieren. Durch die reine Zugkraft, die der Schrumpfanker auf die Teilstücke ausübt, können die Teilstücke klein gehalten werden und mit relativ dünnen Schrumpfankern sicher und fest miteinander verbunden werden. Die Zugkräfte in den Schrumpfankern lassen sich exakt vorausberechnen, da kein Torsionsmoment und keine Reibungskräfte auftreten. Die Montage und die Demontage ist ausserordentlich einfach und sicher, da sie jeweils bei einfacher Erwärmung der Schrumpfanker erfolgt.

Für den Fachmann war es überraschend, dass die Extrusionsspalten, die zwischen den Teilstücken liegen, unter dem Einfluss der hohen Schrumpfkräfte ihre Parallelität behielten, und sich selbst bei übergrossen Giesserbreiten keine Abweichung zeigten. Auch werden überraschenderweise trotz der hohen Schrumpfankerkräfte keine unregelmässigen Verengungen der Extrusionsspalte im Nahbereich der Schrumpfanker hervorgerufen.

Durch die Verbindung der Teilstücke zu einem Giesserblock mittels Schrumpfens können die Teilstücke mit einer sehr genau berechenbaren Kraft so stark zu einem Giesserblock zusammengepresst werden, dass dieser weitgehend unempfindlich gegen Stösse oder sonstige von aussen auf diesen einwirkende Kräfte ist. Die spanabhebende Endbearbeitung und die Transporte des Giesserblockes sind ohne besondere Vorsichtsmassnahmen möglich. Eine Konsole wird nicht benötigt, ja selbst die untere Fläche des Giessers muss nicht feinstbearbeitet werden.

In einer vorteilhaften Ausführungsform sind die Schrumpfanker mit einer zentrischen Bohrung versehen, die zur Aufnahme eines Wärmemittels dienen.

Besonders vorteilhaft sind die Schrumpfanker über ihre Länge mit Bohrungen versehen, in welche elektrische Heizstäbe einführbar sind, die zur Längung der Schrumpfanker aufgeheizt werden. Es ist so möglich, die Schrumpfanker in kurzer Zeit und in einfachster Weise auf die erforderliche Dehnungstemperatur zu erwärmen.

In einer anderen Ausführungsform sind die Schrumpfanker mit zentrischen Durchgangsbohrungen versehen, wobei an den Enden der Bohrungen Anschlussmöglichkeiten für die Durchleitung von Heizmitteln, wie Dampf, Gase oder Flüssigkeiten vorgesehen sind. Die Anschlussmöglichkeiten können aus in den Schrumpfanker eingearbeiteten Gewinden oder Konen bestehen. Mit den durchgehenden Bohrungen ist es durch Durchleiten von Kühlmitteln auch möglich, den Schrumpfprozess zu beschleunigen, indem die Schrumpfanker schneller abgekühlt werden.

In einer zweckmässigen Ausführungsform werden die um den Schrumpfanker in dem Giessblock befindlichen ringförmigen Hohlräume als Temperierbohrungen beim Begiessen von Bändern verwendet. Hierzu werden diese Hohlräume miteinander durch Zu- und Abführkanäle für eine Temperierflüssigkeit verbunden.

Zur gleichmässigen Anpressdruckverteilung wurde als vorteilhaft gefunden, die Anpressflächen der Teilstücke des Giesserblockes oberhalb und unterhalb der Mittellinie der Schrumpfanker durch zusätzliche, in die untere Giessblockhälfte eingearbeitete, Ausnehmungen so anzugleichen, dass gleiche Federzahlen erhalten werden.

Ein erfindungsgemässes Verfahren zur Zusammenfügung der profilierten Teilstücke zu einem Giesserblock ist dadurch gekennzeichnet, dass

a) die Teilstücke des Giesserblockes an ihren inneren Flächen vor dem Zusammenfügen zu einem Giesserblock feinstbearbeitet werden,

b) der Giesserblock aus den einzelnen Teilstücken zusammengefügt und die Muttern auf den Schrumpfankern nur so fest angezogen werden, dass sich die Teilstücke entlang ihrer Flächen so ausrichten lassen, dass ihre inneren Oberflächen stufenlos aneinander anschliessen,

c) nach dem Ausrichten der Teilstücke die Muttern auf den Schrumpfankern mit einem Drehmomentschlüssel zur Vorspannung der Schrumpfanker mit einem kleinen Drehmoment gleichmässig angezogen und die Stellung der Muttern zum Teilstück markiert werden,

d) jeder zweite Schrumpfanker erwärmt wird und die Muttern um einen voraus berechneten Anzugswinkel weitergedreht werden,

e) nach der Abkühlung der ersten Schrumpfanker die übrigen Schrumpfanker erwärmt und deren Muttern um den gleichen Anzugswinkel weitergedreht werden, und

f) dann zur Fertigstellung des Giesserblockes die Ablaufflächen für die Giesslösung einer Feinstbearbeitung unterzogen werden.

Mit diesem Verfahren ist es in überraschend einfacher Weise möglich, jeden Giesserblock, der aus einzelnen, profilierten Teilstücken besteht, sicher und fest mit genau berechenbarer Kraft so stark zusammenzupressen, dass ein Verschieben der Teilstücke unmöglich wird. Es werden von den Schrumpfankern weder durch Reibung noch durch Torsion erzeugte Kräfte in den Giesserblock eingeleitet, sondern nur reine Zugkräfte. Die Montage und die Demontage sind nach diesem Verfahren sehr einfach und exakt durchführbar.

Das Verfahren eignet sich für die Zusammenfügung aller Giesserblöcke, die aus Teilstücken bestehen.

Die Erfindung wird nachstehend anhand von Zeichnungen näher erläutert. Es zeigen:

Fig. 1 einen Mittenschnitt durch einen Giesserblock eines Kaskadengiessers zur gleichmässigen Aufbringung von 4 Schichten auf eine Bahn mit Schrumpfankern, die als Stehbolzen ausgeführt sind.

Fig. 2 den gleichen Kaskadengiesser mit Schrumpfankern, die an beiden Enden mit Muttern versehen sind.

Fig. 3 einen Kaskadengiesser zur gleichzeitigen Aufbringung von 4-12 Schichten mit Schrumpfankern, die an einem Ende mit einem Kopf versehen sind.

Fig. 4 eine Aufsicht auf die Seite A des Giesserblockes nach Fig. 3.

Fig. 5 einen Mittenschnitt durch einen Giesserblock eines Vorhanggiessers zur gleichzeitigen Aufbringung von 6 Schichten auf eine Bahn, bei welchem die Schrumpfanker als Stehbolzen ausgebildet sind.

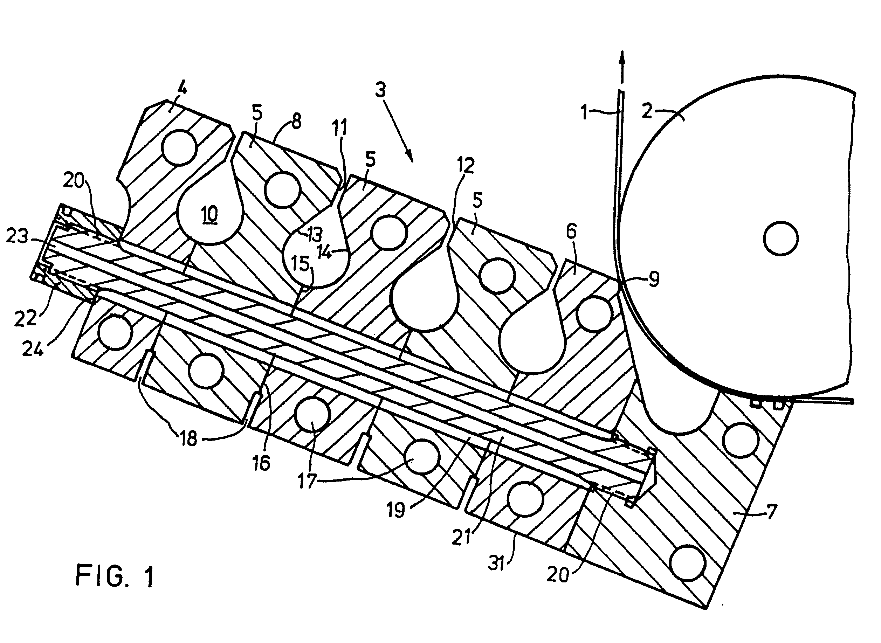

In Fig. 1 ist ein Mittenschnitt durch einen Giesserblock eines Kaskadengiessers 3 dargestellt. Die zu beschichtende Film- oder Papierbahn 1 wird über eine Antragwalze 2 an dem Giesserschnabel 9 des Kaskadengiessers 3 in kleinem Abstand zur Aufnahme der Schichten vorbeigeführt. Die einzelnen Schichten werden dadurch erzeugt, dass die verschiedenen Flüssigkeiten zur Bildung der Schichten mittels Pumpen und Rohrleitungen (nicht dargestellt) in die Verteilerkammern 10 gedrückt werden und in den Extruderschlitzen, die aus den Wänden 11, 12 der Teilstücke 4, 5, 6 gebildet werden, zu den Ablaufflächen 8 gefördert werden. Die einzelnen Flüssigkeitsschichten fliessen dann als Filme, der Schwerkraft folgend, die Ablaufflächen 8 hinab, legen sich auf den Ablaufflächen übereinander, erreichen den Giesserschnabel 9 auf dem unteren Teilstück 6 und werden auf die Bahn 1 übertragen.

Ein gleichmässiger Beguss der Filmbahn 1 mit einer Vielzahl von Schichten ist jedoch nur möglich, wenn die Ablaufflächen 8 und die jeweiligen Flächen 11, 12 der Extruderschlitze exakt übereinstimmen. Bereits eine Differenz von Micrometern in der Parallelität der Schlitze oder der Ablaufflächen 8 verursacht eine ungleichmässige Schichtdicke des Filmes und führt somit zum Beispiel bei Colorfilmen zu erheblichen Farbunterschieden der begossenen Schichten bei daraus gefertigten Colorbildern.

Die Kaskadengiesser 3 werden aus einer Anzahl von Teilstücken 4 bis 7 zusammengesetzt. Der in Fig. 1 gezeigte Kaskadengiesser besitzt ein oberes Teilstück 4, dann eine Anzahl n-1 gleicher Teilstücke 5, die sich nach der Anzahl der zu giessenden Schichten n richtet, ein unteres Teilstück 6 mit dem Giesserschnabel 9 und einem Unterdruckteilstück 7 beim Begiessen.

In den Giesserblock sind Temperierbohrungen 17 eingearbeitet, die miteinander verbunden sind und mit einem Wärmemittel durchströmt werden, so dass der gesamte Giesserblock überall gleichmässig temperiert ist.

Vor dem Zusammenbau des Giesserblockes 3 werden die einzelnen Teilstücke 4, 5, 6, 7 an den Innenflächen 11, 12, 13, 14, 15, 16 fertig feinstbearbeitet. Auch die Temperierbohrungen 17 sind bereits fertig bearbeitet. Aus diesen Teilstücken 4 bis 7 wird der Giesserblock 3 zusammengefügt (Fig. 1), die Schrumpfanker 21 in das Unterdruckteilstück 7 eingeschraubt und die Muttern 22 auf den Gewinden 20 der Schrumpfanker 21 nur so fest gegen das Teilstück 4 angezogen, dass sich die Teilstücke 4 bis 7 entlang ihrer Flächen 15, 16 durch leichten Druck gegeneinander verschieben und ausrichten lassen. Die Ausrichtung der Teilstücke 4 bis 7 erfolgt so, dass die Flächen 13, 14 der Verteilerkammern 10 für die Giesslösungen ohne Stufe ineinander übergehen.

Nach dem Ausrichten der Teilstücke 4 bis 7 werden die Muttern 22 auf den Schrumpfankern 21 mit einem Drehmomentschlüssel weiter angezogen. Das Drehmoment wird im Verhältnis zu den Gewindeabmessungen der Schrumpfanker 21 sehr klein gewählt und gerade so gross, dass die Schrumpfanker 21 eine definierte leichte Vorspannung erhalten, um sicherzustellen, dass die Anpressflächen 15, 16 zwischen den Teilstücken 4 bis 7, die Mutterauflagefläche 24 und die Gewinde 20 der Schrumpfanker 21 kein Spiel mehr aufweisen.

Die Muttern 22 befinden sich dann in ihrer Ausgansstellung für das Einschrumpfen der Schrumpfanker 21. Die Stellung der Muttern 22 zu dem oberen Teilstück 4 werden, zum Beispiel durch Anreissen, markiert. Der erforderliche Anzugswinkel der Muttern 22 wird aus dem gewünschten Anpressdruck vorausberechnet und ebenfalls als Endstellung der Muttern 22 auf dem oberen Teilstück markiert.

Zum Längen der Schrumpfanker 21 werden diese nun erwärmt. Zweckmässigerweise werden nicht alle Schrumpfanker 21 gleichzeitig erwärmt, um ein Verschieben der ausgerichteten Teilstücke 4 bis 7 gegeneinander zu vermeiden. Es wird daher die Erwärmung der Schrumpfanker 21 in Schritten vorgenommen, wobei zunächst nur jeder zweite Schrumpfanker 21 erwärmt wird und die Muttern 22 um den vorausberechneten und markierten Anzugswinkel verdreht werden und nach Abkühlung der ersterwärmten Schrumpfanker 21 werden die übrigen erwärmt und deren Muttern 22 um den Anzugswinkel verdreht.

Da die Länge der Schrumpfanker 21 durch die Erwärmung zugenommen hat, kann das Anziehen bzw. Verdrehen der Muttern 22 ohne Kraftaufwand vorgenommen werden. Bei ausreichender Erwärmung der Schrumpfanker 21 lassen sich die Muttern von Hand um den gewünschten und vorausberechneten Anzugswinkel verdrehen.

Nach dem Abkühlen aller Schrumpfanker 21 ist die Montage des Giesserblockes 3 beendet. Durch die beim Erkalten wieder verkürzten Schrumpfanker 21 werden die Anpressflächen 15, 16 der Teilstücke 4 bis 7 durch eine reine Zugkraft fest und sicher aneinandergepresst und ein Verschieben der Teilstücke praktisch unmöglich gemacht.

Für die Erwärmung der Schrumpfanker 21 sind mehrere Möglichkeiten gegeben. Ein massiver Schrumpfanker ist nur bedingt einsetzbar, da die Erwärmung des Schrumpfankers von aussen von der Wärmeleitfähigkeit abhängig ist und bei einer langen Aufheizzeit auch die Teilstücke 4 bis 7 miterwärmt werden. Günstiger ist dann schon eine induktive Aufheizung des Schrumpfankers mit elektrischer Energie.

Als eine sehr einfache und vorteilhafte Lösung hat sich erfindungsgemäss die Erwärmung der Schrumpfanker 21 durch elektrische Heizstäbe herausgestellt. Die Schrumpfanker 21 sind hierzu mit Bohrungen 23 versehen, in die die Heizstäbe eingeführt werden (Fig. 1).

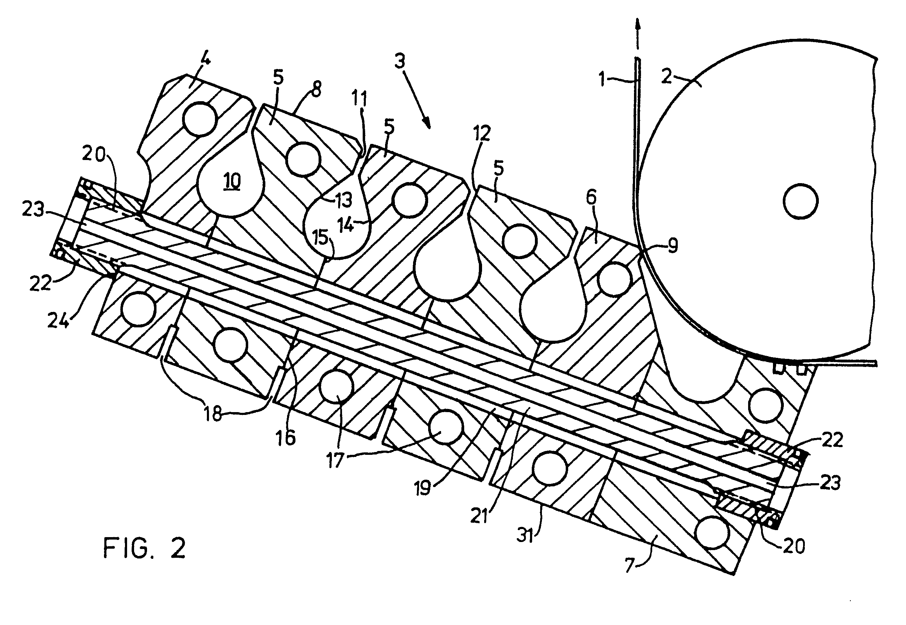

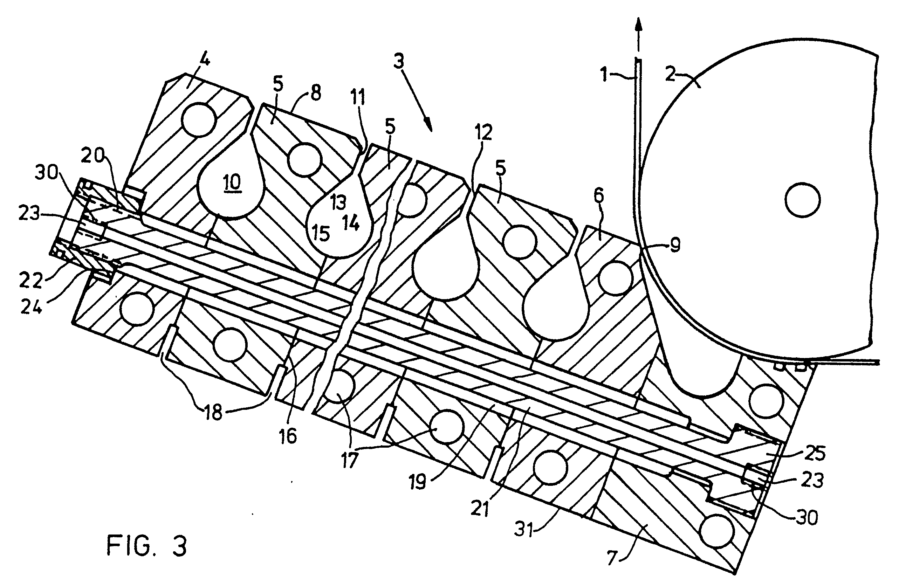

In einer vorteilhaften Ausbildung des Giesserblockes sind die Bohrungen 23 im Schrumpfanker 21 von beiden Seiten zugänglich (Fig. 2 und 3). Bei Fig. 2 werden beidseitig Muttern 22 zur Halterung des Schrumpfankers 21 verwendet und in Fig. 3 werden in einer weiteren Ausführungsform des Giesserblockes 3 Stehbolzen mit Kopf 25 als Schrumpfanker 21 verwendet. Bei den Ausbildungen der Giesserblöcke nach Fig. 2 und 3 können die Schrumpfanker 21 nach der Erwärmung und dem Anziehen der Muttern 22 schnell abgekühlt werden, indem Luft oder ein Kältemittel durch die Bohrungen 23 des Schrumpfankers geleitet wird.

Die Schrumpfanker 21 eignen sich auch zur Erwärmung mittels Gasen, Dampf oder Flüssigkeiten, wenn an die beidseitigen Bohrungen 23 entsprechende Zu- und Ableitungen angeschlossen sind. Die Bohrungen 23 können hierzu mit Innengewinden 30 oder Konen als Anschluss versehen sein (Fig. 3).

Für den Fachmann war es überraschend, dass die Extrusionsspalten, die durch die Flächen 11 und 12 der Teilstücke 4 bis 7 gebildet werden und eine Länge quer zur Ablaufrichtung der Giesslösung von 2 m und mehr haben können, unter dem Einfluss der erheblichen Schrumpfkräfte ihre Parallelität über die gesamte Breite des Giesserblockes behielten. Dies ist jedoch nur dann der Fall, wenn der Giesserblock so beschaffen ist, dass die Flächengrösse der Anpressflächen 15 und 16 sowie die Querschnitte der Teilstücke 4 bis 7 so ausgeführt sind, dass die Federzahlen der oberen und der unteren Blockhälften bezogen auf die Mittellinie der Schrumpfanker 21 gleich gross sind, so dass unter dem Einfluss der Schrumpfkräfte keine Biegung des Giesserblockes auftritt. Diese gleiche Flächengrösse wird durch zusätzliche Ausnehmungen 18 in der unteren Hälfte des Giesserblockes 3 erreicht. Diese Ausnehmungen 18 werden so weit in den Giesserblock eingearbeitet, dass die Anpressflächen 15 und 16 so gross sind, dass die Federzahlen der Blöcke gleich sind.

Fig. 3 zeigt einen Giesserblock 3 für ein Kaskadengiessverfahren, der je nach der geforderten Anzahl von Schichten, die zu giessen sind, aus einer Vielzahl von Teilstücken 4 bis 7 besteht. Colorfilme und -papiere haben eine erhebliche Anzahl von einzelnen Schichten, zum Beispiel 9 oder 12, die in einem Arbeitsgang auf eine Film- oder Papierbahn 1 aufgetragen werden. Hierzu kann der Giessblock 3 durch Verwendung weiterer mittlerer Teilstücke 5 erweitert werden. Für einen Kaskadengiesser zum Begiessen von neun Schichten werden zwischen das obere Teilstück 4 und das untere Teilstück 6 acht gleiche Teilstücke 5 eingesetzt und mit entsprechend langen Schrumpfankern 21 aneinandergepresst.

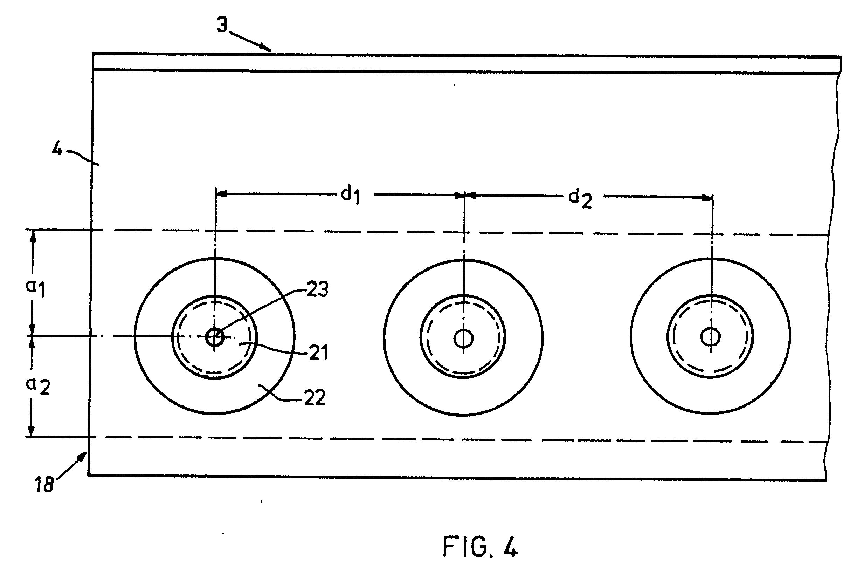

In Fig. 4 ist eine Aufsicht auf die Seite des Giessblockes 3 nach Fig. 3 dargestellt. Die Mittenabstände $d_1$, $d_2$, $d_3$... sind so gewählt, dass jedem Schrumpfanker 21 ein gleich grosser Querschnittsanteil des Giesserblockes 3 entgegensteht. Durch die Wahl der Tiefe der zusätzlichen Ausnehmungen 18 wird erreicht, dass die jeweiligen Anpressflächen oberhalb der waagerechten Mittellinie $a_1$ durch die Schrumpfanker 21 so gross sind, dass die Federzahlen übereinstimmen mit denen unterhalb der Mittellinie $a_2$.

Es zeigt sich überraschenderweise, dass die hohen Schrumpfankerkräfte keinerlei Verengung der Extrusionsspalte im Nahbereich der Schrumpfanker 21 hervorrufen, wenn die Mittenabstände $d_1$, $d_2$, $d_3$... der Schrumpfanker 21 nicht zu gross gewählt werden.

Vorteilhafterweise können die ringförmigen Hohlräume 19 (Fig. 1 bis 3 und 5) zwischen dem Giesserblock 3 und den Schrumpfankern 21 als Temperierbohrungen genutzt werden, indem diese durch Zu- und Abführkanäle miteinander verbunden werden. Hierdurch wird der Giesserblock 3 vereinfacht, da zumindest ein Teil der Temperierbohrungen 17 entfallen kann.

Die Demontage des Giesserblockes 3 erfolgt in ebenso einfacher Weise wie die oben beschriebene Montage. Zur Demontage werden elektrische Heizstäbe in die Bohrungen 23 der Schrumpfanker 21 eingeführt und die Schrumpfanker 21 gelängt bis sich die Muttern 22 ohne Gewalt leicht lösen lassen. Eine Demontage kann zur Überarbeitung der von aussen nicht zugänglichen Flächen 11 bis 16 oder aber zum Umbau eines vorhandenen Giesserblockes 3 in einem Giesserblock mit mehreren oder wenigeren Teilstücken 5 durchgeführt werden.

Nach jeder Montage eines Giesserblockes 3 erfolgt die spanabhebende Endbearbeitung und Feinstbearbeitung der Ablaufflächen 8 für den Ablauf der Giesslösungen. Es zeigt sich, dass ein Giesserblock 3 durch die erfindungsgemässe Schrumpfverbindung mit Schrumpfankern mit der vorausberechenbaren Kraft so stark zusammengepresst wird, dass er weitgehend unempfindlich gegen Stösse und von aussen einwirkende Kräfte ist. Auch die spanabhebende Endbearbeitung und der Transport des Begiesserblockes können ohne besondere Vorsichtsmassnahmen durchgeführt werden.

Ein weiterer Vorteil des erfindungsgemässen Giessers besteht darin, dass die Unterseite 31 bei Kaskadengiessern 3 (Fig. 1, 2, 3) wegen einer fehlenden Konsole keine Feinstbearbeitung erfordert. Der Giesserblock kann direkt durch eine Dreipunktlagerung auf dem Giessergestell befestigt werden.

Die im Text und in den Fig. 1 bis 4 beschriebenen Giesserblöcke 3 eines Kaskadengiessers stellen nur Beispiele dar. Die Schrumpfverbindung mit Schrumpfankern 21 kann vielmehr an jedem bekannten, aus Teilstücken zusammengesetzten Giesserblock für Mehrfachbeguss Anwendung finden und zu vorteilhaft leichten und in den Ablaufflächen 8 kurzen Giessern ohne schwere Konsolen oder Hohlblockträgern führen.

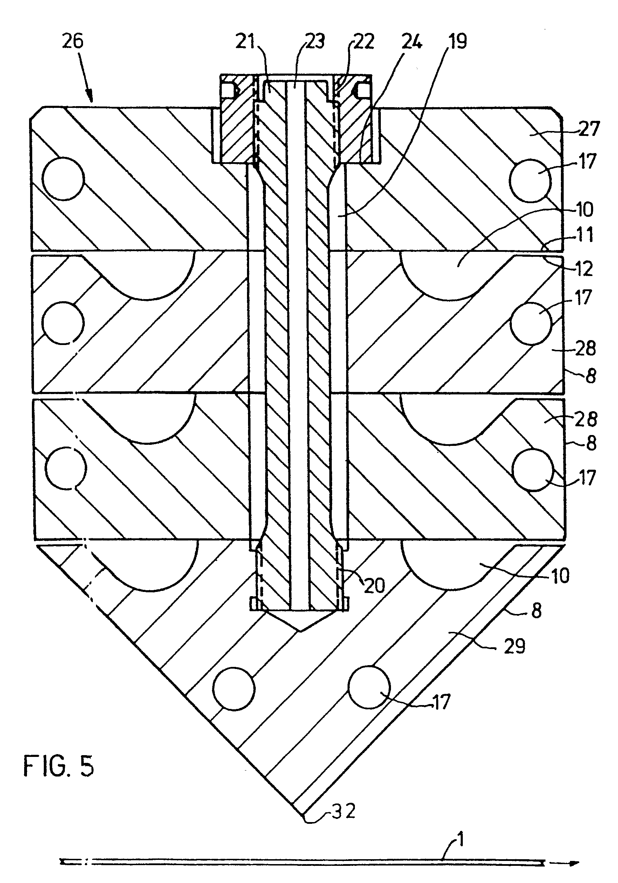

In Fig. 5 ist ein Giesserblock 26 für ein Vorhangbeschichtungsverfahren dargestellt, dessen Teilstücke 27 bis 29 ebenfalls vorteilhafterweise durch Schrumpfanker 21 verbunden und zusammengepresst sind. Bei diesem Vorhanggiesser für den gleichzeitigen Beguss einer Film- oder Papierbahn mit sechs Schichten treten die Flüssigkeiten für den Beguss aus den sechs Verteilerkammern 10 aus dem durch die Flächen 11, 12 gebildeten Extrusionsschlitzen aus und fliessen an den Ablaufflächen 8 entlang übereinander, um sich an der unteren Spitze 32 des V-förmigen Giesserblockes 26 zu vereinigen. Diese sechs Schichten fallen frei als Vorhang auf eine darunter bewegte Bahn 1 und legen sich auf diese als Beguss auf.

Die Montage dieses Vorhanggiessers 26 erfolgt in der gleichen Weise wie unter Fig. 1 beschrieben. Die Verbindung mit zwei Muttern 22 (Fig. 2) oder mit Stehbolzen mit Kopf (Fig. 3) ist hierbei nicht möglich. Da auch eine von zwei Seiten zugängliche Bohrung 23 in dem Schrumpfanker 21 aufgrund der Konstruktion und Funktion des Giessers nicht möglich ist, können die ringförmigen Hohlräume 19 durch Kanäle miteinander verbunden zur Kühlung der erwärmten Schrumpfanker und gleichzeitig als Temperierhohlräume während der Produktion mit dem Giesser verwendet werden.

## Patentansprüche

1. Vorrichtung zum Begiessen von bewegten Bändern mit mehreren Schichten, insbesondere zum Begiessen von photographischen Filmen und Papieren mit photographischen Emulsionen und Schichten, wobei die Vorrichtung aus einem Giesserblock mit mehreren miteinander verschraubten profilierten Teilstücken besteht, dadurch gekennzeichnet, dass zur Zusammenfügung der Teilstükke (4 bis 7 bzw. 27 bis 29) des Giesserblockes (3, 26) Schrumpfanker (21) vorgesehen sind.

2. Vorrichtung nach Anspruch 1, dadurch gekennzeichnet, dass die Schrumpfanker (21) mit zentrischen Bohrungen (23) zur Aufnahme eines Wärmemittels versehen sind.

3. Vorrichtung nach Ansprüchen 1 und 2, dadurch gekennzeichnet, dass die Schrumpfanker (21) mit zentrischen Durchgangsbohrungen (23) versehen sind, und an den Enden der Schrumpfankerbohrungen (23) Anschlussmöglichkeiten (30) für die Durchleitung von Heiz- oder Kühlmitteln, wie Flüssigkeiten, Gase oder Dampf, vorgesehen sind.

4. Vorrichtung nach Anspruch 2, dadurch gekennzeichnet, dass die um die Schrumpfanker (21) in dem Giesserblock (3, 26) befindlichen ringförmigen Hohlräume (19) als Temperierbohrungen beim Begiessen von Bändern (1) verwendbar und miteinander durch Zu- und Abführkanäle für eine Temperierflüssigkeit verbunden sind.

5. Vorrichtung nach Anspruch 1, dadurch gekennzeichnet, dass die Anpressflächen (15, 16) der Teilstücke (4 bis 7) des Giesserblockes (3) oberhalb und unterhalb der Mittellinie der Schrumpfanker (21) durch zusätzliche in die untere Giesserblockhälfte eingearbeitete Ausnehmungen (18) so gross sind, dass die Federzahlen in den Blöcken gleich sind.

6. Verfahren zur Zusammenfügung der profilierten, an ihren inneren Flächen feinstbearbeiteten Teilstücke eines Giesserblocks zum Begiessen von bewegten Bändern, insbesondere von Bahnen mit photographischen Emulsionen und Schichten, vor der Fertigstellung des Giesserblokkes durch Feinstbearbeitung der Ablaufflächen für die Giesslösungen, dadurch gekennzeichnet, dass

a) die Teilstücke (4 bis 7 bzw. 27 bis 29) des Giesserblockes (3 bzw. 26) durch Schrumpfanker (21) zusammengefügt werden, deren Muttern (22) auf den Schrumpfankern (21) nur so fest angezogen werden, dass sich die Teilstücke (4 bis 7 bzw. 27 bis 29) entlang ihrer inneren Flächen (11 bis 14) so ausrichten lassen, dass ihre Oberflächen stufenlos aneinander anschliessen,

b) nach dem Ausrichten der Teilstücke (4 bis 7 bzw. 27 bis 29) die Muttern (22) auf den Schrumpfankern (21) mit einem Drehmomentschlüssel zur Vorspannung der Schrumpfanker (21) mit einem kleinen Drehmoment gleichmässig angezogen und die Stellungen der Muttern (22) zum Teilstück (4, 26) markiert werden,

c) jeder zweite Schrumpfanker (21) erwärmt wird und die Muttern (22) um einen vorausberechneten Anzugswinkel weitergedreht werden,

d) nach der Abkühlung der ersten Schrumpfanker (21) die übrigen Schrumpfanker (21) erwärmt und deren Muttern (22) um den gleichen Anzugswinkel weitergedreht werden.

7. Verfahren nach Anspruch 6, dadurch gekennzeichnet, dass die Schrumpfanker (21) über ihre Länge mit Bohrungen (23) versehen sind und elektrische Heizstäbe in die Bohrungen (23) eingeführt werden, die zur Längung der Schrumpfanker (21) aufgeheizt werden.

## Claims

1. Apparatus for coating moving bands with several layers, in particular for coating photographic films and paper with photographic emulsions and layers, the apparatus consisting of a casting block comprising several profiled parts screwed together, characterised in that shrinkage anchors (21) are provided for joining the parts (4 to 7 or 27 to 29) of the casting block (3, 26) together.

2. Apparatus according to Claim 1, characterised in that the shrinkage anchors (21) have central bores (23) for accommodating a heating means.

3. Apparatus according to Claims 1 and 2, characterised in that the shrinkage anchors (21) have central through-bores (23), and that connecting means (30) for the passage of heating or cooling means such as fluids, gas, or steam are provided at the ends of the bores (23) of the shrinkage anchors.

4. Apparatus according to Claim 2, characterised in that the annular cavities (19) situated around the shrinkage anchors (21) in the casting block (3, 26) may be used as tempering bores when coating bands (1) and are connected with each other by inflow and outflow channels for a tempering liquid.

5. Apparatus according to Claim 1, characterised in that the contact surfaces (15, 16) of the parts (4 to 7) of the casting block (3) above and below the midline of the shrinkage anchors (21) are adjusted in size by additional recesses (18) formed in the lower half of the casting block, so that the spring numbers in the blocks are equal.

6. Process for joining together the profiled parts, micro-finished on their internal surfaces, of a casting block for coating moving bands, in particular webs, with photographic emulsions and layers, prior to the finishing of the casting block by micro-finishing of the flow discharge surfaces of the casting solutions, characterised in that:

(*a*) the parts (4 to 7 or 27 to 29) of the casting block (3 or 26) are joined together by shrinkage anchors (21), the nuts (22) of which are tightened on the anchors (21) only to such an extent that the parts (4 to 7 or 27 to 29) are still capable of aligning themselves along their internal surfaces (11 to 14) so that the surfaces are smoothly continuous one with the other;

(*b*) after alignment of the parts (4 to 7 or 27 to 29), the nuts (22) are uniformly tightened on the shrinkage anchors (21) with a small torque, using a torque wrench, so as to pretension the shrinkage anchors (21), and the positions of the nuts (22) in relation to the part (4, 26) are marked;

(*c*) every second shrinkage anchor (21) is heated and the nuts (22) are further turned through a previously calculated tightening angle, and

(*d*) after cooling of the first shrinkage anchor (21), the remaining shrinkage anchors (21) are heated and their nuts (22) are further turned through the same tightening angle.

7. Process according to Claim 6, characterised in that the shrinkage anchor (21) has bores (23) along its length and electric heating rods are introduced into the bores (23), which are heated to lengthen the shrinkage anchors (21).

**Revendications**

1. Dispositif en vue de couler plusieurs couches sur des bandes en mouvement, en particulier en vue de couler des couches et des émulsions photographiques sur des pellicules et des papiers photographiques, ce dispositif étant constitué d'un bloc de coulée comportant plusieurs pièces individuelles profilées et vissées l'une à l'autre, caractérisé en ce que, pour assembler les pièces individuelles (4 à 7 ou 27 à 29) du bloc de coulée (3, 26), on prévoit des tirants rétractiles (21).

2. Dispositif suivant la revendication 1, caractérisé en ce que les tirants rétractiles (21) comportent des passages centraux (23) destinés à recevoir un agent chauffant.

3. Dispositif suivant les revendications 1 et 2, caractérisé en ce que les tirants rétractiles (21) comportent des passages centraux (23) tandis que, aux extrémités de ces passages (23) des tirants rétractiles, on prévoit des possibilités de raccordement (30) pour la circulation d'agents chauffants ou réfrigérants tels que des liquides, des gaz ou de la vapeur.

4. Dispositif suivant la revendication 2, caractérisé en ce que les espaces annulaires creux (19) entourant les tirants rétractiles (21) dans le bloc de coulée (3, 26) peuvent être utilisés comme passages de mise en équilibre de température lors d'une coulée effectuée sur des bandes (1), tandis qu'ils sont reliés l'un à l'autre par des canaux d'admission et d'évacuation prévus pour un liquide de mise en équilibre de température.

5. Dispositif suivant la revendication 1, caractérisé en ce que, au moyen d'évidements supplémentaires (18) usinés dans la moitié inférieure du bloc de coulée, les surfaces de pressage (15, 16) des pièces individuelles (4 à 7) du bloc de coulée (3) ont, au-dessus et en dessous de la ligne centrale des tirants rétractiles (21), des dimensions telles que les indices d'élasticité soient égaux dans les blocs.

6. Procédé d'assemblage des pièces individuelles profilées d'un bloc de coulée, ces pièces étant soumises à un usinage précis sur leurs surfaces intérieures, en vue d'effectuer une coulée sur des bandes en mouvement, en particulier en vue de couler des couches et des émulsions photographiques sur des bandes, et ce avant la réalisation définitive du bloc de coulée par un usinage précis des surfaces d'écoulement prévues pour les solutions de coulée, caractérisé en ce que:

a) les pièces individuelles (4 à 7 ou 27 à 29) du bloc de coulée (3 ou 26) sont assemblées au moyen de tirants rétractiles (21) dont les écrous (22) sont serrés uniquement avec une force telle que ces pièces individuelles (4 à 7 ou 27 à 29) puissent se mettre en alignement le long de leurs surfaces intérieures (11 à 14) et que, ainsi, leurs surfaces puissent s'adapter l'une à l'autre sans gradins;

b) après la mise en alignement des pièces individuelles (4 à 7 ou 27 à 29), au moyen d'une clé dynamométrique, on serre uniformément les écrous (22) sur les tirants rétractiles (21) avec un faible moment de torsion, afin de mettre ces tirants rétractiles (21) sous précontrainte, et l'on repère les positions des écrous (22) par rapport à la pièce (4, 26);

c) on chauffe un tirant rétractile (21) sur deux et on continue à faire tourner les écrous (22) sur un angle de serrage préalablement calculé, et

d) après le refroidissement des premiers tirants rétractiles (21), on chauffe les autres (21) dont on continue à faire tourner les écrous (22) sur le même angle de serrage.

7. Procédé suivant la revendication 6, caractérisé en ce que les tirants rétractiles (21) comportent, sur leur longueur, des passages (23) dans lesquels on introduit des cartouches chauffantes électriques qui sont chauffées pour allonger les tirants rétractiles (21).

FIG. 1

FIG. 2

FIG. 3

FIG. 4

FIG. 5